# EUROPÄISCHE PATENTANMELDUNG

(11) **EP 2 450 682 A2**
(43) Veröffentlichungstag der Anmeldung: **09.05.2012**
(21) Anmeldenummer: 11008905.9
(22) Anmeldetag: 09.11.2011
(51) Int. Cl.: G01K 1/12, G01K 1/16, G01K 13/02

(54) **Temperatursensorvorrichtung und Verfahren zum Herstellen einer Temperatursensorvorrichtung**

(30) Priorität: 09.11.2010 DE 102010050660
(71) Anmelder: Rombach, Alexander, 78112 St. Georgen (DE)
(72) Erfinder: Rombach, Alexander, 78098 Triberg (DE); Gladkow, Evgenij, 77756 Hausach (DE); Schiefer, Hartmut, 78087 Moenchweiler (DE)
(74) Vertreter: Goy, Wolfgang

(57) **Zusammenfassung**

Eine Temperatursensorvorrichtung mit einem an Zuleitungsenden 18 eines Kabels 16 kontaktierten Temperatursensorelement 14, das in einem hülsenförmigen, endseitig eine geschlossene Stirnfläche 22 aufweisenden Gehäuseelement 24 vorgesehen ist, aus welchem anderenends das Kabel herausgeführt ist, soll im Hinblick auf ihre thermischen, insbesondere ihre thermisch-dynamischen, Eigenschaften betreffend eine kurze Reaktionszeit auf Änderungen der zu messenden Temperatur verbessert, gleichzeitig eine Fertigbarkeit der Vorrichtung unter Großserienbedingungen verbessert, dabei die thermischen und elektrischen Eigenschaften besser reproduzierbar gestaltet werden. Die Erfindung schlägt vor, dass das endseitig an einem Träger 12; 54; 58 befestigte Temperatursensorelement in wärmeleitendem Kontakt mit der innenseitigen Stirnfläche des Gehäuseelements steht, dass der Kontakt unmittelbar oder über eine wärmeleitende Verbindungsschicht 23, 25 zur Stirnfläche bewirkt wird und dass der Träger und/oder das Temperatursensorelement unlösbar an einer Innenwand des Gehäuseelements festgelegt sind.

## Beschreibung

Die vorliegende Erfindung betrifft eine Temperatursensorvorrichtung nach dem Oberbegriff des Hauptanspruchs. Ferner betrifft die vorliegende Erfindung ein Verfahren zum Herstellen einer Temperatursensorvorrichtung, insbesondere nach dem Oberbegriff des Hauptanspruchs, sowie die Verwendung einer solchen.

Aus dem Stand der Technik sind gattungsgemäße Temperatursensorvorrichtungen beispielsweise im Zusammenhang mit der Temperaturmessung von Heizungs- oder (Warm-)Wasserversorgungsanlagen bekannt. Auf einem (isolierenden) Substrat aufgebaute Widerstands-Temperatursensoren als Temperatursensorelemente werden zu diesem Zweck in hülsenförmigen Gehäuseelementen gehalten, welche einends eine geschlossene Stirnfläche und anderenends eine Öffnung zum Herausführen eines das Temperatursensorelement kontaktierenden Kabels aufweisen. Um den thermischen Übergang zwischen einem (mit dem zu messenden Medium in Kontakt stehenden) Gehäuseelement und dem darin vorgesehenen Temperatursensorelement sicherzustellen, ist bei der aus dem Stand der Technik bekannten Vorrichtung das hülsenförmige Gehäuseelement mit einer Wärmeleitpaste o.dgl. wärmeleitendem Material gefüllt, in welches zumindest das Temperatursensorelement eingebettet ist. Eine Abdichtung oder Zugentlastung der so realisierten bekannten Sensorvorrichtung erfolgt typischerweise durch ein Rollieren der (typischerweise metallischen) Hülse.

Derartige, als bekannt vorausgesetzte Temperatursensorvorrichtungen weisen gemäß der vorliegenden Erfindung zahlreiche technische Verbesserungspotenziale auf. Zunächst ist im Hinblick auf eine kurze Reaktionszeit die Realisierung des Wärmeübergangs vom (metallischen) Gehäuse über das Wärmeleitmaterial auf das darin eingebettete Sensorelement nicht optimal; abhängig von den jeweiligen Wärmeleitfähigkeiten sowie Wärmekapazitäten entstehen Dynamiknachteile durch die mit dem komplexen Erwärmungsvorgang verbundenen Zeitverzögerungen.

Darüber hinaus hat sich eine als aus dem Stand der Technik bekannt vorausgesetzte Struktur insbesondere für eine Serienfertigung mit reproduzierbaren Eigenschaften auch über große Stückzahlen als problematisch erwiesen. Aus den erwähnten strukturellen Gründen sind die Wärmeübergangsverhältnisse im inneren des Gehäuseelements nicht vollständig beherrschbar, hinzu kommt eine aufwendige Fertigung bei der Montage (etwa im Hinblick auf ein reproduzierbares Einsetzen und Positionieren des Sensorelements im Gehäuseinneren sowie im Zusammenwirken mit dem pastösen wärmeleitenden Material). Im Ergebnis führt dies dazu, dass Temperatursensorvorrichtungen mit vergleichbaren Eigenschaften nur mit deutlich erhöhtem Aufwand in Serie produzierbar sind.

Ein weiterer potenzieller Nachteil aus dem Stand der Technik entsteht aus der Nutzung derartiger (typischerweise in den Außenabmessungen genormter) Temperatursensorvorrichtungen in Einsatzumgebungen etwa im Heizungs- bzw. Warmwasserbereich. So liegt eine besondere Herausforderung etwa darin, derartige Sensorelemente einfach und mit geringem Aufwand austauschbar an einem Einsatzort auszugestalten, gleichzeitig mögliche Manipulations- bzw. Missbrauchsmöglichkeiten in der Handhabung zu minimieren.

Aufgabe der vorliegenden Erfindung ist es daher, eine gattungsgemäße Temperatursensorvorrichtung im Hinblick auf ihre thermischen, insbesondere ihre thermisch-dynamischen, Eigenschaften betreffend eine kurze Reaktionszeit auf Änderungen der zu messenden Temperatur zu verbessern, gleichzeitig eine Fertigbarkeit der Vorrichtung unter Großserienbedingungen zu verbessern, dabei die thermischen und elektrischen Eigenschaften besser reproduzierbar zu gestalten. Zusätzlich sind Mittel zu schaffen, wie eine derartige Temperatursensorvorrichtung in konstruktiv einfacher, gleichzeitig einfach austauschbarer und vor Manipulationen geschützter Weise an einem Einsatzort oder Einbaukontext (insbesondere im Zusammenhang mit einer zugeordneten Montage- bzw. Aufnahmehülse) montiert werden kann.

Die Aufgabe wir durch die Temperatursensorvorrichtung mit den Merkmalen des Hauptanspruchs, das Verfahren zum Herstellen einer Temperatursensorvorrichtung, insbesondere Temperatursensorvorrichtung nach dem Hauptanspruch, mit den Merkmalen des unabhängigen Patentanspruchs 13 sowie die Verwendung nach dem unabhängigen Patentanspruch 18 gelöst; vorteilhafte Weiterbildungen der Erfindung sind in den Unteransprüchen beschrieben. Zusätzlich wird im Rahmen der vorliegenden Erfindung unabhängiger Schutz für eine Anordnung aus einer ein zylindrisches Gehäuseelement aufweisenden Temperatursensorvorrichtung im Zusammenwirken mit einer hohlzylindrischen Aufnahmehülse beansprucht, wie sie im Patentanspruch 15 und davon abhängigen Ansprüchen beschrieben ist, auch unabhängig von der konkreten Temperatursensorvorrichtung nach einem der Ansprüche 1 bis 12.

In erfindungsgemäß vorteilhafter Weise ist das endsetig an einem Träger befestigte Temperatursensorelement mittels des Trägers in Kontakt gebracht mit der innenseitigen Stirnfläche des Gehäuseelements (wobei dieser Kontakt auch mittelbar durch eine - dünne - wärmeleitende Verbindungsschicht erfolgen kann), so dass der primäre Wärmeübergang zum typischerweise widerstandsbasierten Temperatursensorelement über die Stirnfläche des Gehäuseelements erfolgt. Durch den unmittelbaren (oder über die dünne Verbindungsschicht mittelbaren) Kontakt ist zudem eine hohe thermische Dynamik der Vorrichtung sichergestellt, dergestalt, dass sich als Reaktion auf eine Erwärmung der Gehäusestirnfläche (durch ein geeignet umgebendes äußeres Medium) das innenseitig ansetzende Temperatursensorelement schnellstmöglich erwärmt, insoweit Verzögerungszeiten, wie sie etwa aus dem Stand der Technik durch einen unberechenbaren Wärmeübergangmittels eines (typischerweise voluminösen) Wärmeleitpastenbereichs entstanden, signifikant minimiert werden können.

Dabei sieht eine bevorzugte Realisierungsform der Erfindung vor, den Träger als Kunststoffkörper zu realisieren, der durch ein Umspritzen der Zuleitungsenden mit einem Kunststoffmaterial gebildet ist und typischerweise eine zylindrische Außenform aufweist, welche an eine weiterbildungsgemäß vorgesehene hohlzylindrische Innenform des Gehäuseelements angepasst ist. Damit kann, im Rahmen eines entsprechend eingerichteten Herstellungsverfahrens, dieser Träger dann im Inneren des durch Umspritzen hergestellten Kunststoffmaterials die Zuleitungsenden bis zur Stirnseite führen, an welcher dann das Temperatursensorelement kontaktiert (ggf. mechanisch fixiert) werden kann. Gleichzeitig kann der so realisierte Träger diese Anordnung im Inneren des Gehäuseelements fixieren, oder das Sensorelement selbst kann etwa an seiner Mantelfläche durch Verkleben mit der Innenwand des Gehäuseelements (typischerweise unlösbar) befestigt sein. Statt des Umspritzens ist es auch möglich, die Kunststoffteile vorher zu spritzen.

In besonders bevorzugter Weiterbildung sieht diese Realisierungsform der Erfindung dann vor, dass in Richtung auf das stirnseitig ansitzende (bzw., je nach Fertigungsstadium, vorzusehende) Temperatursensorelement, die im Kunststoffmaterial eingebetteten Leitungsenden im Leitungsdurchmesser verjüngt sind. In besonders bevorzugter Weise und im Rahmen einer Realisierungsform der Erfindung geschieht dies dadurch, dass das Litzenbündel als Leiter aufweisende Kabel endseitig bis hin zu einer Einzellitze vereinzelt wird und dann diese Einzellitze (bzw. ein Litzenpaar) die elektrische Verbindung zum Temperatursensorelement herstellt, zu diesem Zweck dann endseitig geeignet aus der Stirnseite des Kunststoff-Trägerkörpers herausragt (und so etwa einen Löt-Kontaktabschnitt für entsprechende, typischerweise plane Kontaktabschnitte des bevorzugt plättchenartig ausgebildeten Temperatursensorelements anbietet).

Eine derartige Realisierungsform der vorliegenden Erfindung gestattet es damit, den Träger mit seinen konstruktiv-geometrischen Eigenschaften reproduzierbar und großserientauglich durch ein Spritzverfahren herstellungstechnisch günstig zu realisieren.

Eine zweite Realisierungsform der Erfindung sieht vor, dass das Temperatursensorelement an der innenseitigen Stirnfläche durch Verkleben unlösbar befestigt ist. Bei dieser Variante der Erfindung ist es weiterbildungsgemäß günstig, das Temperatursensorelement wiederum endseitig eines Draht- bzw. Litzenpaares des Kabels vorzusehen, wobei jedoch zur Herstellung des thermischen Kontakts mit der innenseitigen Stirnfläche kein Kraftschluss notwendig ist (wobei insoweit dann die Verbindungsdrähte als Träger im Sinne der Erfindung gelten). Auch ist es gemäß Weiterbildungen möglich, analog zum vorbeschriebenen ersten Erfindungsaspekts Abschnitte eines jeweiligen Trägers durch ein Kunststoffmaterial zu umspritzen, um insoweit wiederum einen in das hülsenförmige Gehäuseelement einsetzbaren Abschnitt zu erzeugen.

Gemäß bevorzugter Ausführungsformen der Erfindung, betreffend alle Erfindungsaspekte, ist vorgesehen, den Übergang zwischen dem Temperatursensorelement und der (innenseitigen) Stirnfläche möglichst dünn auszugestalten, wobei als "dünn" im Sinne der Erfindung eine Schichtdicke zwischen dem Thermosensorelement und der Stirnfläche kleiner als 100µm, bevorzugt kleiner als 50µm und weiter bevorzugt kleiner 25µm gilt. Dabei liegt es auch im Rahmen der Erfindung, eine Schichtdicke gleich 0 vorzusehen, dies ist insbesondere der Fall, wenn das Temperatursensorelement unmittelbar an der innenseitigen Stirnfläche anliegt und zwischenliegendes Material (etwa eine Wärmeleitpaste) vollständig verdrängt und/oder gar nicht erst vorhanden ist.

Weiterbildungsgemäß und alternativ im Rahmen der Erfindung gilt als "dünn" auch eine Schichtdicke, die in einem anspruchsgemäß angegebenen Verhältnis zu einem maximalen Körperdurchmesser des Temperatursensorelements (gemessen in einer Ebene der Stirnfläche, also typischerweise senkrecht zu einer axialen Richtung des hülsenförmigen Gehäuseelements) liegt.

Bevorzugte Ausführungsformen der Erfindung, wiederum für alle Aspekte, sehen vor, dass in geeigneter Weise Zugentlastungen und/oder temperatur-(außendehnungs-)kompensierende Mittel, insbesondere in den Träger, integriert sein können. Zu diesem Zweck können etwa geeignet verlängerte Leiterabschnitte vorgesehen sein, um unterschiedliche relative Temperaturausdehnungen der beteiligten Materialen auszugleichen; zum Zweck einer Zugentlastung ist es etwa günstig, geeignete Klemm- bzw. Verriegelungsabschnitte im (Umspritzungs-)Kunststoffmaterial vorzusehen.

Eine besonders bevorzugte Ausführungsform der Erfindung sieht zudem vor, das Kunststoffmaterial des Trägers, insbesondere des eingangs beschriebenen ersten Erfindungsaspekts, so auszuformen, dass sich der Träger rückseitig aus dem offenen Ende des hohlzylindrischen Gehäuseelements heraus erstreckt. Dies ermöglicht durch geeignete geometrische Ausgestaltung dieses rückwärtigen Endes etwa einen effektiven Knickschutz für das herausgeführte Kabel.

Auch unter einem weiteren Erfindungsaspekt, für welchen unabhängig Schutz im Rahmen der vorliegenden Erfindung beansprucht wird, ist eine derartige Ausgestaltung des Trägers günstig: So hat es sich weiterbildungsgemäß als vorteilhaft erwiesen, diesen rückwärtig aus den hülsenförmigen Gehäuseelement herausstehenden Abschnitt des Trägers als Rastpartner (Rastabschnitt) auszugestalten, etwa mittels geeignet ausgeformter Verzahnungsabschnitte, welche zum Zusammenwirken mit einem Verbindungsstück einer (hohlzylindrischen, zum Einsetzen des Temperatursensorelements ausgebildeten) Aufnahmehülse vorgesehen sind. Typischerweise ist eine derartige Aufnahmehülse einem konkreten Einsatzkontext zugeordnet, ragt also etwa in einen Wasserbehälter hinein o.dgl. und ist so ausgestaltet, dass dort die Temperatursensorvorrichtung einsetzbar ist. Gemäß dieser bevorzugten Weiterbildung der Erfindung ragt in einem solchen eingesetzten Zustand dann der Rastabschnitt rückwärtig aus der Anordnung aus innenliegender Temperatursensorvorrichtung und dieser umgebender hohlzylindrischer Aufnahmehülse heraus und wirkt zusammen mit einem Verbindungsstück (weiterbildungsgemäß genutzt als Plombe bzw. Plombierstück), welches wiederum in Wirkverbindung mit der Aufnahmehülse steht. Eine solche Anordnung führt dann dazu, dass die Temperatursensorvorrichtung (mittels ihres rückwärtigen Rastabschnitts) rastend in der hohlzylindrischen Aufnahmehülse fixiert ist. Wenn nun, vorteilhaft und weiterbildungsgemäß, das Verbindungsstück (Plombierstück) so ausgestaltet ist, dass die Temperatursensorvorrichtung nur dann aus der Verrastung (und damit aus der Aufnahmehülse) gelöst werden kann, wenn das Plombierstück durch Zerstören des Kunststoffmaterials desselben geöffnet wird, ist die Aufgabe der vorliegenden Erfindung überraschend einfach und zuverlässig gelöst, wonach die Temperatursensorvorrichtung einfach und zuverlässig, gleichzeitig manipulationssicher in einem Einsatzort gehalten werden soll.

Diese Lösungsvariante hat zudem den Vorteil, dass mantelseitig (d.h. seitlich zwischen Aufnahmehülse und Gehäuseabschnitt) nicht notwendigerweise ein Wärmeübergang stattfinden muss; die erfindungsgemäße Temperatursensorvorrichtung erfasst, wie oben ausführlich dargelegt, Temperatur am Einsatzort bevorzugt stirnseitig, so dass die weiterbildungsgemäß vorteilhaften Einbauvarianten für eine zuverlässige Sicherung der Temperatursensorvorrichtung mit ihrem stirnseitigen Ende an einer jeweiligen stirnseitigen Endfläche der Aufnahmehülse sorgen.

Während sich die vorliegende Erfindung in besonders vorteilhafter Weise sich für die Verwendung in Wärmezählern (insbesondere sogenannten Kompaktwärmezählern) eignet, sind die Einsatzgebiete der Erfindung hierauf nicht beschränkt. Vielmehr eignet sich die Erfindung für jegliche Form der Temperaturmessung, in Warmwasseranlagen, Gebäudeheizungen, Klimaanlagen oder darüber hinaus, wobei Temperatur-Erfassungsbereiche zwischen 0° und 150° bevorzugt sind, jedoch auch wiederum die vorliegende Erfindung nicht beschränken.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine Temperatursensorvorrichtung gemäß einer ersten bevorzugten Ausführungsform der Erfindung, zusätzlich vorgesehen in einem bevorzugten Einbaukontext einer hohlzylindrischen Aufnahmehülse, aus dieser die Temperatursensorvorrichtung (zerstörend) lösbar ist;
- Fig. 2: eine Längsschnittansicht der Temperatursensorvorrichtung (ohne Einbaukontext) gemäß einer zweiten Ausführungsform der Erfindung;
- Fig. 3: eine Detailansicht des Ausschnitts A - A in Fig. 2;
- Fig. 4 und Fig. 5: Varianten einer Befestigung eines Temperatursensorelements endseitig an Zuleitungsenden eines Kabels;
- Fig. 6: eine Draufsicht auf ein Stanzteil zum Verdeutlichen einer möglichen Herstellungsvariante zur Realisierung des Ausführungsbeispiels der Fig. 2, Fig. 3;
- Fig. 7: ein drittes Ausführungsbeispiel als Variante des Ausführungsbeispiels der Fig. 2, wonach ein Temperatursensorelement gegen die Vorspannung einer Druckfeder gegen die innenseitige Stirnwand des Gehäuseelements vorgespannt ist und
- Fig. 8: eine vierte Ausführungsform der Erfindung zum Beschreiben eines zur Realisierung des Einbaukontext der Fig. 1 alternativen Einbaukontext mit einer die Temperatursensorvorrichtung (einer beliebigen der vorgenannten Ausführungsformen) gegen die Kraft einer Druckfeder in eine Aufnahmehülse vorspannenden Befestigungsanordnung.

Die nachfolgenden Ausführungsbeispiele gelten als exemplarisch. Dabei sollen sämtliche im Zusammenhang mit einer Ausgestaltung des Trägers und/oder einer Befestigung bzw. Kontaktierung des Sensorelements als zur Erfindung gehörig offenbart gelten, auch in beliebiger Kombination und über die konkret beschriebenen Ausführungsbeispiele hinaus.

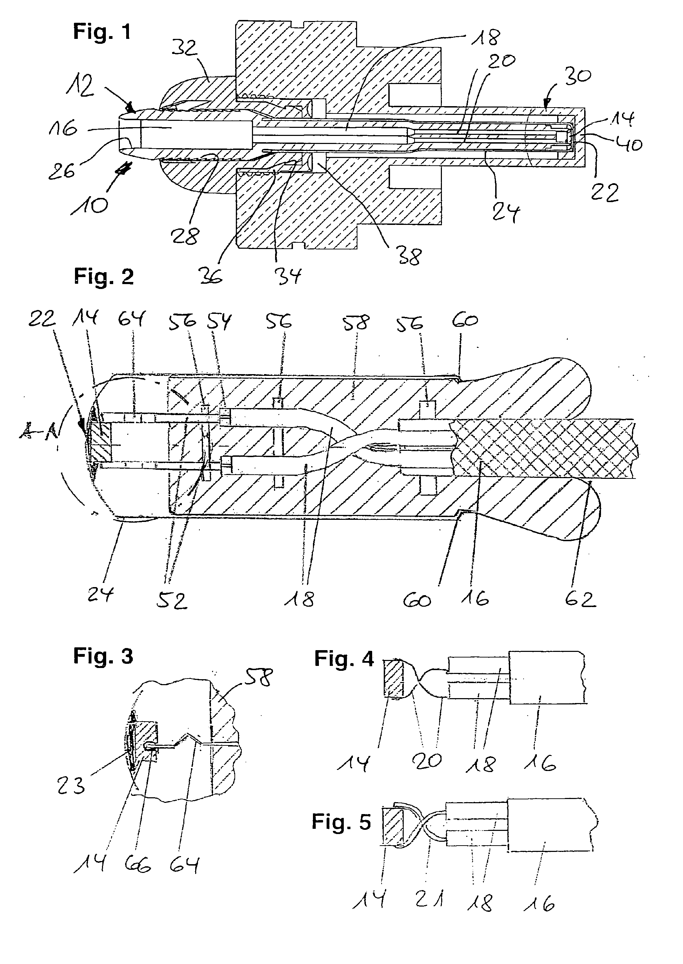

Nachstehend wird im Zusammenhang mit der Längsschnittdarstellung der Fig. 1 ein erstes Ausführungsbeispiel der Erfindung beschrieben. Dabei ist die in Fig. 1 in einem Einbaukontext beschriebene Temperatursensorvorrichtung auch unabhängig von diesem Einbaukontext (nämlich der beschriebenen Aufnahmehülse) zu verstehen und als zur Erfindung gehörig im Rahmen der vorliegenden Anmeldung offenbart.

So zeigt das Ausführungsbeispiel der Fig. 1 ein langgestreckte Temperatursensorvorrichtung 10, welche einen Kunststoffkörper 12 als langgestreckten Träger aufweist, an welchem endseitig ein flaches, plattenförmiges Temperatursensorelement 14 befestigt ist. Dieses Temperatursensorelement ist typischerweise realisiert als Platin-Dünnschichtsensor und wird beispielsweise von der Anbieterin Heraeus Sensor Technology GmbH, Kleinostheim, hergestellt.

Der Träger 12 ist realisiert durch ein Umspritzen eines Kabelendes 16 mit einem geeignet spritzfähigen Kunststoff, wobei aus dem Kabelende 16 als Zuleitungsende ein Paar von (als Litzenbündel) realisierten Drahtenden 18 herausragt, welche wiederum im Hinblick auf das vordere Befestigungsende für den Temperatursensor 14 abisoliert und auf Einzellitzen 20 vereinzelt sind. Auf diese Weise bildet das Kunststoffmaterial einen langgestrecktzylindrischen Körper aus, in welchen die Leitungsanordnungen 16, 18, 20 eingebettet und endseitig zum elektrischen Kontaktieren (typischerweise Verlöten) mit geeigneten Anschlussflächen des Temperatursensorelements 14 herausgeführt sind. Gleichzeitig wirkt der Kunststoffkörper als (mechanisches) Trägerelement für das Temperatursensorelement und ist (typischerweise durch mantelseitiges Verkleben) mit einer langgestreckten, einends zum Zusammenwirken mit dem Temperatursensorelement 14 eine geschlossene Stirnwand 22 aufweisenden Hülsenelement 24 verbunden.

Genauer gesagt ist der Träger 10, mantel- bzw. umfangsseitig angepasst an eine Innenweite (der typischerweise metallischen oder aus einem Kunststoffmaterial gebildeten Hülse 24) soweit in das geschlossene Ende in Richtung auf die Stirnfläche 22 eingeschoben, dass das Temperatursensorelement, weiter bevorzugt mit einer sensor-wirksamen Flachseite, die Wand 22 innenseitig kontaktiert, wobei zur zusätzlichen Verbesserung eines Wärmeübergangs in diesem Bereich eine ansonsten bekannte Wärmeleitpaste (nicht gezeigt) eingebracht ist.

Im bezogen auf die geschlossene Stirnwand 22 rückwärtigen Bereich der Hülse 24 ragt der Körper 10 (unter Ausbildung einer Erweiterung 26) aus der Hülse 24 heraus. Diese rückwärtige Erweiterung 26 erhält dadurch endseitig den Charakter eines Knickschutzes für das Kabel 16. Gleichzeitig ist im Bereich dieser Erweiterung mantelseitig ein umlaufender Verzahnungsabschnitt 28 ausgebildet, welcher in nachfolgend zu beschreibender Weise und gemäß einer weiteren bevorzugten, jedoch das prinzipielle Ausführungsbeispiel der Temperatursensorvorrichtung der Fig. 1 nicht beschränkenden Weise für eine Verankerung der gezeigten, als Baugruppe begreifbaren Temperatursensorvorrichtung 10 in einer Aufnahmehülse 30 sorgt.

Genauer gesagt ist diese Aufnahmehülse 30, geeignet eingebracht in ein zu messendes Medium (z.B. ein wässeriges Medium zur Temperaturerfassung), vorgesehen, um darin austauschbar die Temperatursensorvorrichtung 10 aufzunehmen. Gleichzeitig soll, etwa zum Zweck der Manipulationsverhinderung, eine lediglich versehentliche oder missbräuchliche Entfernung einer Temperatursensorvorrichtung bestmöglich verhindert werden. Gelöst wird dies im Ausführungsbeispiel der Fig. 1 dadurch, dass ein (Kunststoff-)Verbindungsstück 32 vorgesehen ist, welches, über einen Verrast- bzw. Schnappabschnitt 34 und eine zugehörige

Schraubhülse 36, so in einer verbreiterten Öffnung 38 der Aufnahmehülse 30 festgelegt ist, dass bei eingesetzter Temperatursensorvorrichtung der mantelseitige Rast- bzw. Verzahnungsabschnitt 28 des rückwärtig vorstehenden Abschnitts 26 (des Körpers 12) unter Ausbildung einer Verrastung im Verbindungsstück gehalten ist (genauer: dort gemäß geeigneter Ausrichtung der Verzahnung zwar einschiebbar ist, jedoch durch den Rasteffekt an einem Herausbewegen gehindert ist). Das Verbindungsstück 32 verankert in der in Fig. 1 gezeigten Weise über den als Hinterschnitt ausgebildeten Abschnitt 34 die Anordnung gegenüber dem (durch Verschrauben fest im Körper 30 sitzenden) Element 36, sodass insoweit eine feste und stabile Verbindung gewährleistet ist. Ein Entfernen der Temperatursensorvorrichtung ist damit nur möglich, wenn das Verbindungsstück 32 durch Zerstören im Bereich des Rastabschnitts 28 gelöst wird. Daraufhin ist dann (bei herausgenommener Temperatursensorvorrichtung 10) der (verbleibende) Körper des Verbindungsstücks 32 aus seinem Eingriff 34 bzw. der Öffnung 38 entfernbar und, beim Wieder-Einsetzen einer (ggf. ausgetauschten) Temperatursensorvorrichtung 10, durch ein unbeschädigtes Verbindungsstück 32 ersetzbar. Insoweit erhält das Element 32 den Charakter einer Plombe bzw. eines Plombierstücks und stellt insoweit den Missbrauchs- bzw. Manipulationsschutz im Einbaukontext sicher.

Vorteilhaft ermöglicht es zudem die vorbeschriebene Verrastung zwischen dem Träger 12 und der Aufnahmehülse 30, dass das Hülsenelement 24 mit seiner stirnseitigen Wand 22 (bzw. der erfindungsgemäß unmittelbar daran bzw. dahinter angeordneten Temperatursensoreinheit 14) in stirnseitigem Kontakt mit der Aufnahmehülse 30 steht, wobei wiederum der Wärmeübergang bzw. ein Wärmeeintrag bis hin zum Sensorelement 14 über eine stirnseitige Außenwand 40 der Hülsenbaugruppe 30 erfolgt.

Auf die gezeigte Weise lässt sich somit in betriebssicherer, gleichzeitig in der Handhabung einfach ausgestalteter Weise eine Aufnahme sowie eine Austauschbarkeit der in Fig. 1 gezeigten Temperatursensorvorrichtung gemäß einer ersten Ausführungsform der vorliegenden Erfindung realisieren.

Anhand der Fig. 2, 3 und 6 wird eine zweite bevorzugte Ausführungsform der Erfindung erläutert. Dabei bezeichnen mit der Fig. 1 identische Bezugszeichen korrespondierende Baugruppen bzw. Elemente.

Gezeigt ist, wie innenseitig einer (hier konkav gebogenen) Stirnfläche 22 einer metallischen Hülse 24 das Temperatursensorelement 14 durch Verkleben mit einem wärmeleitenden Klebstoff 50 gesichert ist. Dieser wärmeleitende Klebstoff ist so aufgetragen, dass dessen maximale Dicke < 100im beträgt (sodass Wärmeübertragungs- bzw. Wärmekapazitätseffekte einen Wärmeeintrag von der Stirnfläche 22 in das Sensorelement 14 nicht nachteilig, insbesondere betreffend ein Zeitverhalten, beeinträchtigen). Auch ist der Klebstoff so gewählt, dass seine Wärmeleitfähigkeit mindestens 5W/(m•K) beträgt.

Die Fig. 4 und 5 zeigen - alternative - Möglichkeiten, das Temperatursensorelement 14 mit den Leitungsenden 18 zu verbinden. So beschreibt etwa die Fig. 4 eine Variante der bereits im Zusammenhang mit dem Ausführungsbeispiel der Fig. 1 genutzten Anbindung über einen einzelnen (vereinzelten) Litzenstrang 20 für jeden Anschlusspol. Ein entsprechend dünner Leitungsquerschnitt einer solchen Einzellitze 20 bietet damit den Vorteil, dass über die elektrische Anbindung eine potentiell das Messergebnis verfälschende Wärmeableitung weitestgehend vermieden werden kann. Dagegen zeigt das alternative Ausführungsbeispiel der Fig. 5, bei welchem keine Vereinzelung der endseitigen Litzenabschnitte 21 erfolgt, wie hier durch diese Litzen (und deren Biegbarkeit) eine günstige mechanische Stabilität der Anordnung genutzt werden kann.

Durch diese Realisierungsform ist damit das Sensorelement 14 nicht durch Kleben an der Stirnwand 22 befestigt, vielmehr bezeichnet das Bezugszeichen 25 eine Wärmeleitpaste, welche (allerdings wiederum entsprechend den vorbeschriebenen Breitendimensionen minimiert und schmal) den Wärmeübergang vom Sensor 14 auf die Stirnwand 22 optimiert.

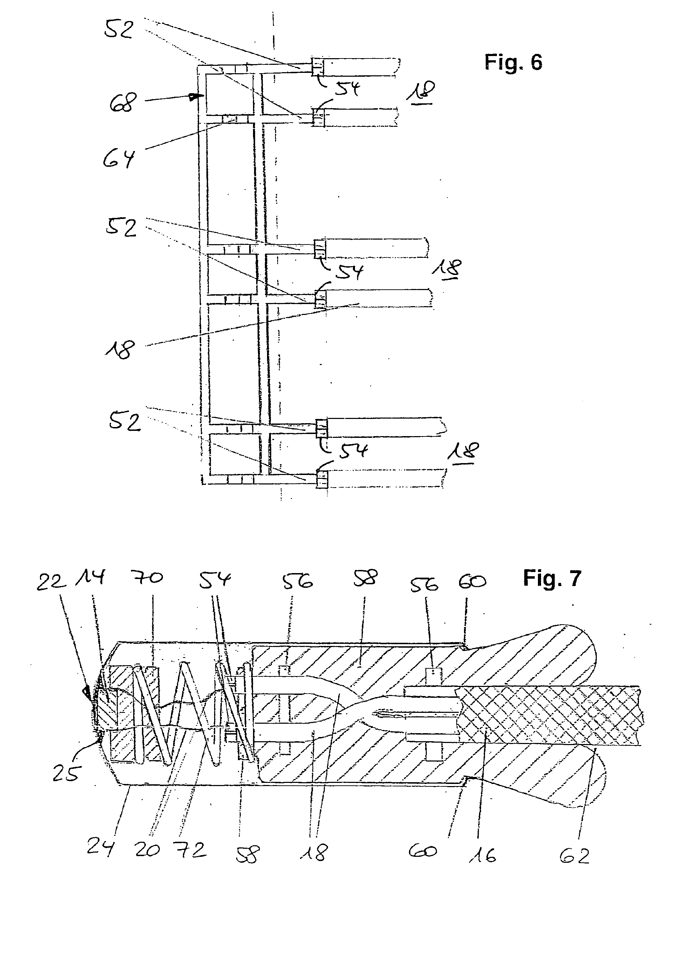

Weitere Funktionskomponenten des Ausführungsbeispiels der Fig. 7 entsprechen dem Beispiel der Fig. 2.

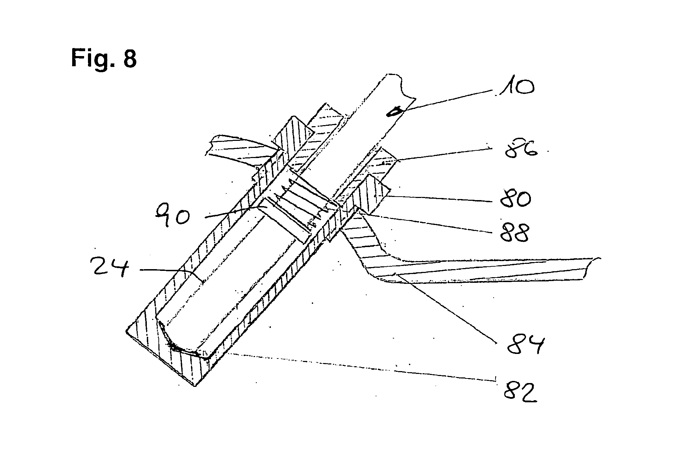

Unter Bezug auf die Fig. 8 wird eine alternative Befestigungsform der Temperatursensorvorrichtung 10 gezeigt. Wiederum ist die (schematisch als Modul gezeigte) Temperatursensorvorrichtung 10 lösbar in einer Aufnahmehülse 80 gehalten, wobei analog zum Ausführungsbeispiel der Fig. 1 eine lichte Innenweite der Hülse 80 Übermaß bezogen auf einen Außendurchmesser des hülsenförmigen Gehäuses 24 der Sensorvorrichtung 10 aufweist und lediglich stirnseitig im Kontaktbereich 82 ein unmittelbarer Wärmeübergang bewirkt wird. Wiederum sitzt die Aufnahmehülse 80 in einem lediglich schematisch gezeigten Aufnahmeaggregat 84 und ist etwa einer Warmwasserversorgung, einer Heizungsanlage oder dergleichen zugeordnet und von extern (in der Figur oben) zum Lösen zugreifbar.

## Patentansprüche

1. Temperatursensorvorrichtung
mit einem an Zuleitungsenden (18) eines Kabels (16) kontaktierten Temperatursensorelement (14), das in einem hülsenförmigen, endseitig eine geschlossene Stirnfläche (22) aufweisenden Gehäuseelement (24) vorgesehen ist, aus welchem anderenends das Kabel herausgeführt ist,
**dadurch gekennzeichnet,**
**dass** das endseitig an einem Träger (12; 54; 58) befestigte Temperatursensorelement in wärmeleitendem Kontakt mit der innenseitigen Stirnfläche des Gehäuseelements steht, dass der Kontakt unmittelbar oder über eine wärmeleitende Verbindungsschicht (23, 25) zur Stirnfläche bewirkt wird und
**dass** der Träger und/oder das Temperatursensorelement unlösbar an einer Innenwand des Gehäuseelements festgelegt sind.

2. Vorrichtung nach Anspruch 1,
**dadurch gekennzeichnet,**
**dass** der Träger (12; 58) ein durch Umspritzen der Zuleitungsenden mit einem Kunststoffmaterial gebildeter, insbesondere zylindrischer Körper ist, der zum Führen des Kabels und zum Ausfüllen und/oder Verschließen eines offenen Endes des bevorzugt hohlzylindrischen Gehäusekörpers bemessen ist.

3. Vorrichtung nach Anspruch 2,
**dadurch gekennzeichnet,**
**dass** der Träger durch mantelseitiges Verkleben mit einem Innenwandabschnitt des Gehäuseelements (24) befestigt ist.

4. Vorrichtung nach einem der Ansprüche 1 bis 3,
**dadurch gekennzeichnet,**
**dass** die im Träger geführten, insbesondere in ein Kunststoffmaterial des Trägers eingebetteten Leitungsenden Litzenabschnitte (20; 21) des Kabels sind, die endseitig unmittelbar mit Kontaktabschnitten des Temperatursensorelements verbunden, insbesondere verlötet, sind.

5. Vorrichtung nach Anspruch 4,
**dadurch gekennzeichnet, dass** die Litzenabschnitte gegenüber einem vorgelagerten Abschnitt des Kabels im Leiterdurchmesser realisiert ausgebildet sind, insbesondere zu einer Einzellitze (20) vereinzelt sind.

6. Vorrichtung nach einem der Ansprüche 1 bis 5,
**dadurch gekennzeichnet,**
**dass** die wärmeleitende Verbindungsschicht einen Klebstoff (23), einen Kitt und/oder eine Wärmeleitpaste (25) aufweist.

7. Vorrichtung nach einem der Ansprüche 1 bis 6,
**dadurch gekennzeichnet,**
**dass** eine maximale Schichtdicke der wärmeleitenden Verbindungsschicht zwischen dem Thermosensorelement und der Stirnfläche kleiner 100µm, bevorzugt kleiner 50µm ist und/oder
ein Verhältnis der maximalen Schichtdicke in µm relativ zu einem maximalen Körperdurchmesser des Temperatursensorelements in mm in einer Ebene der Stirnfläche zwischen 20 und 60, insbesondere zwischen 30 und 60, beträgt.

8. Vorrichtung nach einem der Ansprüche 1 bis 7,
**dadurch gekennzeichnet,**
**dass** das Temperatursensorelement an der innenseitigen Stirnfläche als Innenwand durch Verkleben mit einem wärmeleitenden Klebstoff (23) befestigt ist, der im befestigten Zustand eine Wärmeleitfähigkeit von mehr als 5W/(m · K) aufweist.

9. Vorrichtung nach einem der Ansprüche 1 bis 8,
**dadurch gekennzeichnet,**
**dass** ein Leitungs-Übergangsbereich zwischen dem Kabel und dem Temperatursensorelement eine eine temperaturbedingte Ausdehnungsdifferenz zwischen dem Gehäuseelement und einer das Temperatursensorelement kontaktierenden Zuleitung ausgleichende Leitungsverlängerung, insbesondere in Form eines abgewinkelten, gewundenen, gefalteten oder gefederten Leiterabschnitts (64; 20), aufweist.

10. Vorrichtung nach einem der Ansprüche 1 bis 9,
**gekennzeichnet durch**
Zugentlastungsmittel (56) für die Zuleitungsenden und/oder die Zuleitungsenden mit dem Thermosensorelement verbindende Leiterabschnitte, wobei die Zugentlastungsmittel in ein die Zuleitungsenden umgebendes Kunststoffmaterial eingebettet sind.

11. Vorrichtung nach einem der Ansprüche 1 bis 10,
**dadurch gekennzeichnet,**
**dass** der aus einem Kunststoffmaterial des Kabels und/oder der Zuleitungsenden gebildete Träger mittels eines am Gehäuseelement gebildeten, insbesondere materialverformten, geklebten und/oder abgesetzten Verriegelungsabschnitts in einer axialen Längsrichtung relativ zum Gehäuseelement fixiert ist.

12. Vorrichtung nach einem der Ansprüche 1 bis 11,
**dadurch gekennzeichnet,**
**dass** der aus einem Kunststoffmaterial des Kabels und/oder der Zuleitungsenden gebildete Träger aus dem der Stirnfläche gegenüberliegenden offenen Ende des Gehäuseelements zum Ausbilden einer im Durchmesser vergrößerten Öffnung (26) und/oder eines Kabels-Knickschutzes (62) hervorsteht.

13. Verfahren zum Herstellen einer Temperatursensorvorrichtung mit einem an Zuleitungsenden eines Kabels kontaktierten Temperatursensorelement, das in einem hülsenförmigen, endseitig eine geschlossene Stirnfläche aufweisenden Gehäuseelement vorgesehen ist, aus welchem anderenends das Kabel herausgeführt ist, insbesondere zum Herstellen der Temperatursensorvorrichtung nach einem der Ansprüche 1 bis 13, **gekennzeichnet durch**
die Schritte
- Umspritzen eines im leitungsdurchmesserreduzierten, Zuleitungsenden aufweisenden endseitigen Abschnitts des Kabels mit einem Kunststoffmaterial zum Ausbilden eines an die lichte Innenseite des Gehäuseelements angepassten Trägers,
- elektrisches und mechanisches Fixieren des Temperatursensorelements am endseitigen Stirnbereich des Trägers, insbesondere an dort herausgeführten Endabschnitten der Zuleitungsenden,
- Einführen des Trägers mit stirnseitig ansitzendem Temperatursensorelement in das Gehäuseelement bis zur geschlossenen Stirnfläche und
- unlösbares Fixieren des Trägers und/oder des Temperatursensorelements an einer Innenwand des Gehäuseelements.

14. Verfahren nach Anspruch 13,
**dadurch gekennzeichnet,**
**dass** die leitungsdurchmesserreduzierten Zuleitungsenden durch Vereinzeln eines Litzenbündels des Kabels erfolgt und das Temperatursensorelement mit einer so erzeugten Einzellitze verbunden wird.

15. Temperatursensorvorrichtung nach einem der Ansprüche 1 bis 12,
mit einer einem Einbaukontext, insbesondere Warmwasser- oder Heizungsvorrichtung, zugeordneten hohlzylindrischen Aufnahmehülse (30; 80),
die zum lösbaren Einsetzen des Gehäuseelements so ausgebildet ist, dass die Stirnfläche
entweder durch Wirkung eines Kraftspeichers (88), insbesondere Druckfeder, gegen eine wärmeübertragende Kontaktfläche der Aufnahmehülse vorgespannt ist oder durch Rastmittel (28) festgelegt ist, die die Temperatursensorvorrichtung mit einem Verbindungsstück (32) der Aufnahmehülse rastend verbinden.

16. Vorrichtung nach Anspruch 15,
**dadurch gekennzeichnet,**
**dass** die Rastmittel aus einem rückwärtig aus dem Gehäuseelement der Temperatursensorvorrichtung hervorstehenden Rastabschnitt (28) sowie dem aus einem Kunststoffmaterial realisierten, den Rastabschnitt mantelseitig umschließenden Verbindungsstück (32) realisiert sind.

17. Vorrichtung nach Anspruch 16,
**dadurch gekennzeichnet,**
**dass** der Rastabschnitt so zum Zusammenwirken mit dem Verbindungsstück ausgebildet ist, dass ein Lösen der Temperatursensorvorrichtung aus der hohlzylindrischen Aufnahmehülse ein Zerstören des Verbindungsstücks (32) bewirkt.

18. Verwendung der Vorrichtung nach einem der Ansprüche 1 bis 12, 14 bis 17 als Temperatursensor für Warmwasseranlagen, Gebäudeheizungen oder Klimaanlagen im privaten oder gewerblichen Bereich, insbesondere als Wärmezähler.
